# EUROPÄISCHE PATENTSCHRIFT

(11) **EP 3 781 840 B1**
(45) Veröffentlichungstag und Bekanntmachung des Hinweises auf die Patenterteilung: **12.01.2022**
(21) Anmeldenummer: 19719192.7
(22) Anmeldetag: 11.04.2019
(51) Int. Cl.: F16G 13/16

(54) **ENERGIEFÜHRUNGSKETTE MIT DÄMPFUNGSELEMENTEN SOWIE SEITENTEIL DAFÜR**
CABLE CARRIER HAVING DAMPING ELEMENTS AND SIDE PART FOR SAME
CHAÎNE D'APPROVISIONNEMENT D'ÉNERGIE À ÉLÉMENTS AMORTISSEURS ET PARTIE LATÉRALE CORRESPONDANTE

(30) Priorität: 18.04.2018 DE 202018102144 U
(43) Veröffentlichungstag der Anmeldung: 24.02.2021
(73) Patentinhaber: Igus GmbH, 51147 Köln (DE)
(72) Erfinder: JAEKER, Thilo-Alexander, 53757 Sankt Augustin (DE); DOMMNIK, Jörg, 53819 Neunkirchen-Seelscheid (DE)
(74) Vertreter: Lippert Stachow Patentanwälte Rechtsanwälte
(86) Internationale Anmeldenummer: PCT/EP2019/059301
(87) Internationale Veröffentlichungsnummer: WO 2019/201748

(56) Entgegenhaltungen:
- DE-A1- 10 339 168
- DE-A1-102005 026 667
- DE-A1-102012 106 400
- DE-U1- 29 806 969
- DE-U1-202016 002 624
- GB-A- 2 515 242

## Beschreibung

Die Erfindung betrifft eine Energieführungskette mit einem Führungskanal zur Führung von Schläuchen, Kabeln oder dergleichen zwischen zwei Anschlussstellen, von denen wenigstens eine ortsveränderlich ist, mit mehreren gelenkig miteinander verbundenen Kettengliedern aus Seitenteilen und Querstegen, wobei die Verschwenkbarkeit anschließender bzw. aufeinanderfolgender Kettenglieder gegeneinander durch an den Seitenteilen angeordnete, zusammenwirkende Anschläge mit Anschlagflächen begrenzt ist und wobei elastisch deformierbare Dämpfungselemente vorgesehen sind, die das Auflaufen der Bereiche zwischen den Anschlägen und den Anschlagflächen dämpfen. Die Erfindung betrifft ferner ein Seitenteil als solches mit den erfindungsgemäßen Merkmalen.

Eine Energieführungskette dieser Art ist aus DE 296 07 492 U1 bekannt. Hierbei sind die Dämpfungselemente als Federlippen ausgebildet, die schräg von dem jeweiligen Anschlag abstehen und sich beim Auftreffen der Anschlagfläche des folgenden Kettengliedes elastisch in Richtung auf den jeweiligen Anschlag verbiegen. Derartige Dämpfungselemente haben sich in der Praxis bereits bestens bewährt. Wenn die Federlippen beim Auftreffen der Anschlagflächen gegen den jeweiligen Anschlag verbogen werden, entstehen an der Oberseite der Federlippen Zugkräfte und an der Unterseite Druckkräfte. Die Materialien, aus denen Energieketten hergestellt werden, sind gegen Druckkräfte weitestgehend unempfindlich. Wenn allerdings Zugkräfte auftreten, so besteht die Gefahr, dass in den Materialien, insbesondere bei Kunststoffen, Materialermüdungen auftreten, die zur Verringerung der Lebensdauer der jeweiligen Energieführungskette beitragen.

Eine Weiterentwicklung eines Seitenteils einer Energieführungskette mit Dämpfungselement, hier ebenfalls einer federelastisch verformbaren Federlippe, hat die Anmelderin bereits in WO 2017/182494 A1 vorgeschlagen.

Eine weitere gattungsgemäße Gestaltung zur Anschlagsdämpfung wurde im Patentdokument CN106151379A bzw. im Gebrauchsmuster CN205991137U vorgeschlagen, welche ebenfalls die Merkmale des Oberbegriffs zeigt.

DE 10 2005 026 667 A1 offenbart eine Energieführungskette mit Seitenteilen, welche V-förmige Anschlagflächen aufweisen, die beim Verschwenken zum teilweisen Punktkontakt mit Kontaktbereichen der Anschläge eines folgenden Seitenteils kommen. Dadurch kann die Luft zwischen den Anschlagflächen und Anschlägen entweichen, sodass Kollisionsgeräusche reduziert werden. Außerdem sind die zylindrisch ausgebildeten Anschläge als Ganzes elastisch verformbar.

DE 103 39 168 A1 offenbart ein Seitenteil für eine Energieführungskette, welches schalenförmige bzw. konkave und elastisch deformierbare Dämpfungselemente an Anschlagflächen aufweist, die beim Verschwenken mit Anschlägen eines folgenden Seitenteils zusammenwirken. Die lichte Breite des Dämpfungselements nach DE 103 39 168 A1 ist etwas kleiner als der Durchmesser des zusammenwirkenden Anschlags, sodass das Dämpfungselement beim Auflaufen des Anschlags aufspreizt. Daher sind die Dämpfungselemente nach DE 103 39 168 A1 verschleißanfällig.

Der Erfindung liegt daher die Aufgabe zugrunde, die Lebensdauer von Energieführungsketten zu verlängern, insbesondere die Lebensdauer der Dämpfungselemente zu erhöhen, und vorzugsweise zugleich das Dämpfungsverhalten zwischen den Kettengliedern in den Umlenkungsbereichen zu verbessern.

Erfindungsgemäß wird diese Aufgabe dadurch gelöst, dass zumindest einige Anschläge in ihren Kontaktbereichen, in denen sie mit den Anschlagflächen in Berührung kommen, mindestens einen in Richtung auf die jeweilige Anschlagfläche konvex gewölbten Dämpfungsbügel aufweisen, dass hinter dem Dämpfungsbügel ein Freiraum vorgesehen ist und dass beide Enden des Dämpfungsbügels nach Art einer Bogenbrücke fest mit dem jeweiligen Anschlag verbunden sind. Erfindungsgemäß ist der Dämpfungsbügel dabei mit der zum inneren Führungskanal weisenden Innenwand des jeweiligen Seitenteils verbunden, insbesondere in seitlicher Richtung zumindest in einem Teilbereich zwischen den Enden des Dämpfungsbügels oder über seine gesamte Abmessung einen Verbindungsbereich. Diese zusätzliche Verbindung des Dämpfungsbügels kann dabei insbesondere eine einstückige, vorzugsweise materialeinheitliche, Verbindung mit dem restlichen Körper der Seitenlasche sein. Dadurch wird eine relativ stabile Konstruktion erzielt und die Lebensdauer wird weiter erhöht.

Die gewölbten Dämpfungsbügel schaffen nicht nur einen optimalen Dämpfungseffekt, sondern bei deren Verformung treten im Wesentlichen ausschließlich Druckkräfte auf, wie sie beispielsweise bei Bogenbrücken vorherrschen. Zugkräfte, die zu Materialermüdung führen können, treten bei der erfindungsgemäßen Konstruktion nicht oder nur in sehr geringem Maße auf. Bereits dadurch wird die Lebensdauer spürbar verbessert, insbesondere bei bevorzugter Verwendung von recht steifen Kunststoffen mit geringer Elastizität.

In Kombination mit der Verbindung der Bogenbrücken mit der Innenwand des Seitenteils, d.h. in seitlicher Richtung bzw. der Bogenlänge, wird eine besonders robuste und langlebige Bauweise erzielt, da die Bogenbrücke dadurch unterstützt bzw. stabilisiert wird. Zudem ist der Grad der Verformbarkeit der Bogenbrücke, je nach Dimensionierung der Verbindung mit der Seitenwand, über einen zusätzlichen Freiheitsgrad bedarfsweise einstellbar.

Gemäß der vorliegenden Erfindung ist die Innenwand des Seitenteils im Bereich des Dämpfungsbügels ausgespart. Dabei ist eine in den Freiraum mündende, bzw. mit diesem zusammenhängende, erste Vertiefung sowie eine gegenüberliegende zweite Vertiefung vorgesehen. Beide Vertiefungen sind dabei gegenüber dem umgebenden Bereich der Oberfläche der Innenwand vertieft. Dies vereinfacht erheblich die Herstellung der Bogenbrücke in Spritzgusstechnik, da keine aufwendigen Werkzeuge mit Mitteln zur Erzeugung von Hinterschneidungen erforderlich sind. Zudem kann anhand der Dimensionierung der Vertiefung trotz stabilisierender Verbindung der Bogenbrücke mit der Innenwand eine ausreichende Flexibilität bzw. Verformbarkeit der Bogenbrücke erzielt bzw. Scherkräfte auf die stabilisierende Verbindung können vermieden werden.

Die Vertiefungen liegen den Breitseiten der Bogenbrücke gegenüber und sind dabei räumlich begrenzt. Beide Vertiefungen sind vorzugsweise in Längsrichtung auf eine Abmessung begrenzt, welche etwa der Länge der Bogenbrücke entspricht, bzw. von dieser nur geringfügig z.B. um +/- 20% abweicht. In Höhenrichtung sollte jede Vertiefung zumindest der Bogenhöhe entsprechen.

In bevorzugter Weiterbildung wird vorgesehen, dass die ausgesparten Vertiefungen gegenüber der Oberfläche der Innenwand um mindestens 50% der umgebenden Wanddicke vertieft sind und/oder die Tiefe (in Richtung der Materialdicke der Seitenlasche betrachtet) der Vertiefung mindestens 33% der Breite des Dämpfungsbügels senkrecht zur Längsrichtung beträgt. Hierdurch wird eine besonders gute Verformbarkeit trotz der Verbindung mit der Innenwand erzielt.

Die Seitenteile, aus denen die erfindungsgemäße Energieführungskette zusammengesetzt wird, können in an sich bekannter Weise aus geeignetem Kunststoff bestehen, und insbesondere einteilig bzw. materialeinheitlich im Spritzgussverfahren hergestellt sein. Geeignet sind insbesondere faserverstärkte Polymere, z.B. ein Polyamid, mit vergleichsweise hoher Steifigkeit.

Bei einer solchen Konstruktion können die Dämpfungsbügel an ihren beiden Enden an den zugehörigen Anschlag einstückig angeformt sein. Dies ist nicht nur herstellungstechnisch besonders günstig, sondern es wird mit derartigen einstückig angeformten Dämpfungsbügeln auch ein sehr guter Dämpfungseffekt erzielt.

Vorzugsweise sind auf beiden Seiten der Anschläge - also sowohl an deren Oberseite als auch an deren Unterseite - je ein gewölbter Dämpfungsbügel vorgesehen, so dass der günstige Dämpfungseffekt sowohl im Biegevorgang der Energieführungskette als auch im Streckungsvorgang erzielt wird. Mit anderen Worten, es ist vorzugsweise für beide Schwenkrichtungen, jeweils in die vollständig abgewinkelte Stellung, die im Umlenkbogen vorliegt, und auch in die Strecklage, ggf. mit Vorspannung, ein erfindungsgemäßer gewölbter Dämpfungsbügel vorgesehen.

Der Radius der Wölbung des Dämpfungsbügels ist zweckmäßig vergleichsweise groß ausgebildet, wodurch die Wölbung relativ flach wird. Eine flache Wölbung reicht zur Erzielung des gewünschten Dämpfungseffektes aus. Bei der Verformung des flachgewölbten Dämpfungsbügels tritt bei seiner Verformung fast ausschließlich ein Stauchungseffekt auf, so dass Zugspannungen in dem verformten Bügel weitestgehend vermieden werden können.

Das Verhältnis der Sehnenlänge der Wölbung zur Höhe kann etwa 20:1 betragen, vorzugsweise mindestens 10:1.

Vorzugsweise erstreckt sich der jeweilige Dämpfungsbügel über die gesamte Breite des zugehörigen Anschlags. Dadurch wird der auftretende Druck im Dämpfungsfall über die gesamte Breite des Anschlags verteilt.

Zweckmäßig erstrecken sich der Dämpfungsbügel sowie der hinter diesem befindliche Freiraum quer zur Längsrichtung des jeweiligen Seitenteils. Aufgrund dieser Konstruktion wird der Verformungseffekt des Dämpfungsbügels optimiert. Der Begriff "hinter" betreffend die Lage des Freiraums relativ zum Dämpfungsbügel ist auf die Wirkrichtung des Anschlags bezogen, d.h. an der Seite, welche der wirksamen Anschlagfläche abgewandt ist, wobei letztere sozusagen die vordere Seite des Dämpfungsbügels darstellt. Die Anschlagflächen schlagen vorzugsweise flächig aufeinander und liegen dabei bevorzugt senkrecht zur Hauptebene (d.h. die Ebene, welche durch die Längsrichtung und die Laschenhöhe aufgespannt wird) der Seitenlasche, d.h. in Richtung der Breite bzw. Materialdicke der Seitenlasche.

Die Erfindung ist ohne Beschränkung des Schutzumfangs in der Zeichnung beispielhaft veranschaulicht und im Nachfolgenden im Einzelnen anhand der Zeichnung beschrieben. Es zeigen:
- Fig.1: ein Kettenglied einer erfindungsgemäßen Energieführungskette in perspektivischer Ansicht;
- Fig.2: eine Seitenansicht des Kettenglieds gemäß Fig. 1;
- Fig.3: einen Teilquerschnitt senkrecht zur Längsrichtung der Seitenlasche entlang der Linie III-III aus Fig. 2; und
- Fig.4: eine Seitenansicht zweier miteinander verbundener Kettenglieder, teilweise im Schnitt.

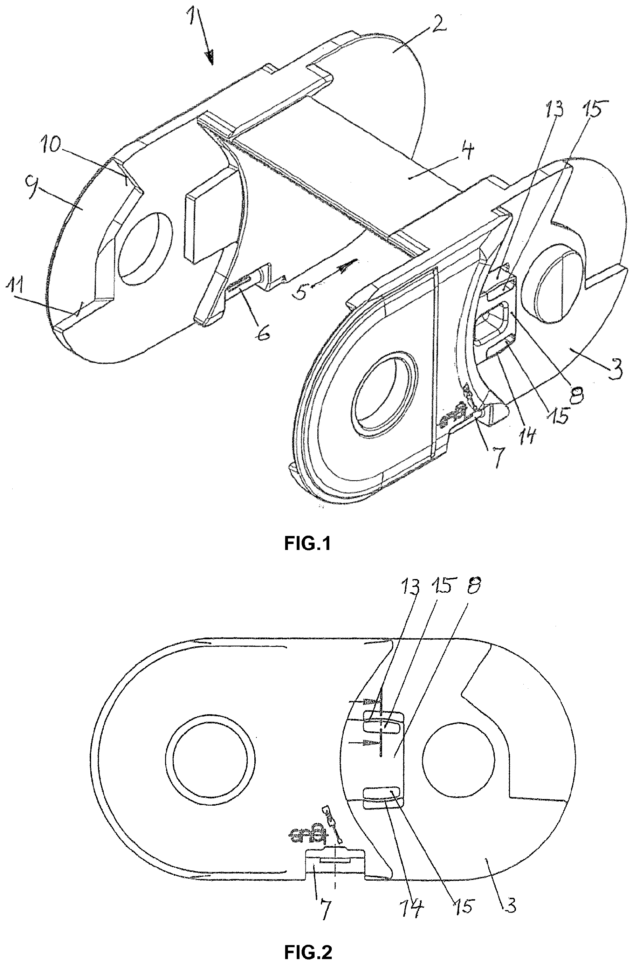

Nach Fig.1 der Zeichnung weist das Kettenglied 1 zwei Seitenteile 2 und 3 auf, die in ihrem in der Zeichnung oben liegenden Bereich mittels eines Querstegs 4 miteinander verbunden sind. Der in der Zeichnung unten liegende Bereich der beiden Seitenteile 2 und 3 wird mittels eines in der Zeichnung nicht dargestellten weiteren Querstegs verbunden.

Zwischen den beiden Seitenteilen 2 und 3 und den beiden Querstegen wird ein Führungskanal 5 gebildet, der zur Aufnahme von Schläuchen, Kabeln und dergleichen dienen soll.

Der untere, in der Zeichnung nicht dargestellte Quersteg, ist aufklappbar, so dass ein Zugang zu dem Führungskanal 5 möglich ist, um die Schläuche, Kabel und dergleichen in die Energieführungskette einzusetzen. Zu dem unteren Quersteg sind an den Seitenteilen 2 und 3 lediglich die Halterungen 6 und 7 dargestellt, von denen mindestens eine Halterung als Scharnierachse ausgebildet ist.

In den Umlenkbereichen der Energieführungskette müssen die Kettenglieder 1 relativ zueinander um einen vorgegebenen Winkel verschwenkt werden. Zur Begrenzung des Verschwenkwinkels sind an den Seitenteilen 2 und 3 jeweils ein Anschlag 8 sowie eine Aussparung 9 mit einer oberen Anschlagfläche 10 und einer unteren Anschlagfläche 11 vorgesehen, wobei sich die Bezeichnungen "oben" sowie "unten" lediglich auf die Darstellung gemäß den Figuren 1 und 2 beziehen.

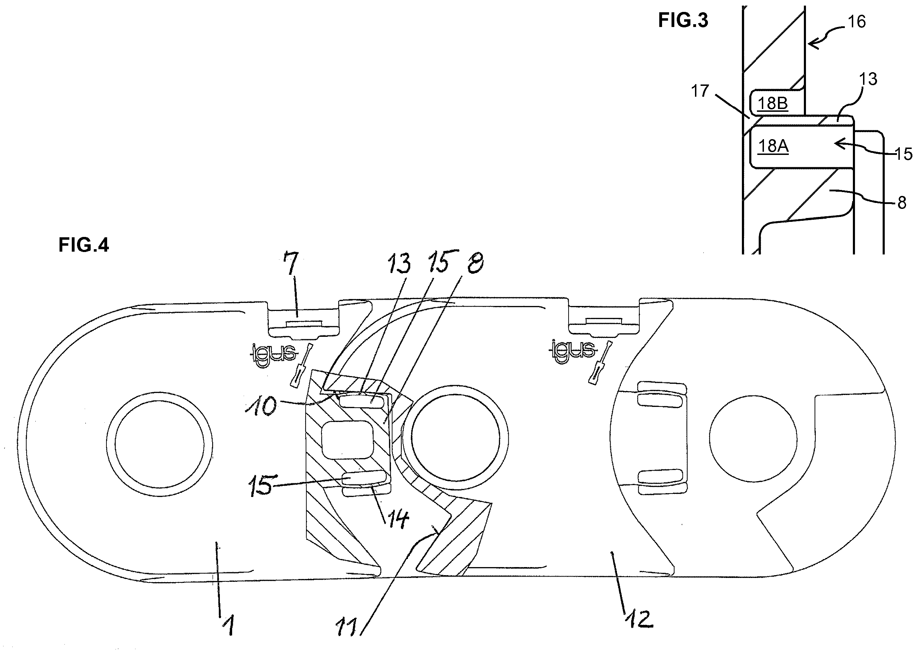

Die Anschläge 8 wirken jeweils mit den Anschlagflächen 10 und 11 des in Fig.4 dargestellten folgenden Kettengliedes 12 zusammen.

Eine schnelle Bewegung der Energieführungsketten war früher oftmals mit einer beträchtlichen und als störend empfundenen Geräuschemission verbunden. Deshalb war man dazu übergegangen, zwischen den Anschlägen 8 und den Anschlagflächen 10 und 11 Dämpfungselemente vorzusehen.

Bei dem in der Zeichnung dargestellten Ausführungsbeispiel sind die Anschläge 8 in ihren Kontaktbereichen, in denen sie mit den Anschlagflächen 10 und 11 des folgenden Kettengliedes 12 in Berührung kommen, in ihren seitlichen Bereichen mit konvex gewölbten Dämpfungsbügeln 13 und 14 ausgestattet, wobei die konvex gewölbten Bereiche jeweils in Richtung auf die entsprechende Anschlagfläche 10 bzw. 11 gerichtet sind.

Hinter jedem Dämpfungsbügel 13 bzw. 14 ist jeweils ein Freiraum 15 vorgesehen. Beim Auftreffen des jeweiligen Dämpfungsbügels 13 bzw. 14 auf die entsprechende Anschlagfläche 10 bzw. 11 kann der Dämpfungsbügel 13 bzw. 14 ein Stück in den Freiraum 15 ausweichen.

Die Dämpfungsbügel 13 und 14 sind nach Art einer Bogenbrücke ausgebildet, wobei deren beide Enden fest mit dem Anschlag 8 verbunden sind.

Aufgrund der brückenartigen Ausgestaltung der Dämpfungsbügel 13 und 14 werden in ihrem Material während ihrer Verformung vornehmlich Druckkräfte erzeugt.

Die erfindungsgemäßen Kettenglieder werden in der Regel einstückig aus Kunststoff hergestellt, wobei die jeweiligen Dämpfungsbügel 13 und 14 an ihren beiden Enden an den zugehörigen Anschlag 8 einstückig angeformt werden.

Das zur Herstellung von Energieketten verwendete Kunststoffmaterial kann Druckspannungen leicht aufnehmen, ohne dass dadurch wesentliche Materialermüdungen auftreten. Insofern kann aufgrund der Tatsache, dass bei der Verformung der Dämpfungsbügel 13, 14 fast ausschließlich Druckkräfte auftreten, die Lebensdauer der mit den erfindungsgemäßen Merkmalen ausgestatteten Energieführungsketten erheblich verlängert werden.

Der Radius der Wölbung der Dämpfungsbügel 13 und 14 ist vergleichsweise groß gewählt, so dass die Wölbung dadurch relativ flach und der Verformungsgrad der Dämpfungsbügel 13 und 14 relativ gering ist. Das Verhältnis der Sehnenlänge der Wölbung zur Höhe beträgt bei dem in der Zeichnung dargestellten Ausführungsbeispiel etwa 20:1.

Gemäß der in der Zeichnung dargestellten Ausführungsform erstreckt sich der jeweilige Dämpfungsbügel 13 bzw. 14 über die gesamte Breite des zugehörigen Anschlags 8, so dass der Anpressdruck über die gesamte Breite des Anschlags 8 gleichmäßig verteilt wird. Dabei erstrecken sich die Dämpfungsbügel 13 und 14 sowie der hinter diesen befindliche Freiraum 15 quer zur Längsrichtung des jeweiligen Seitenteils 2 bzw. 3.

Die Dämpfungsbügel 13 bzw. 14 sind bei dem in der Zeichnung dargestellten Ausführungsbeispiel mit der zum inneren Führungskanal 5 weisenden Wand des jeweiligen Seitenteils 2 bzw. 3 verbunden.

Alternativ ist aber auch eine Ausführungsform möglich, bei der die zum inneren Führungskanal 5 weisende Wand des jeweiligen Seitenteils 2 bzw. 3 im Bereich des jeweiligen Dämpfungsbügels 13 bzw. 14 ausgespart ist. Bei einer solchen Ausführungsform ist der jeweilige Dämpfungsbügel 13 bzw. 14 also nicht mit der Innenwand des jeweiligen Seitenteils 2 bzw. 3 verbunden und kann dadurch beim Auftreffen der jeweiligen Anschlagfläche 10 bzw. 11 über seine gesamte Breite gleichmäßig gestaucht werden.

In Fig. 4 ist ein Teilstück des oberen Trums einer Energieführungskette dargestellt, bestehend aus zwei miteinander verbundenen Kettengliedern 1 und 12. Die obere Anschlagfläche 10 des in der Zeichnung rechten Kettengliedes 12 liegt dabei an dem Anschlag 8 des Kettengliedes 1 an, wobei der obere Dämpfungsbügel 13 des Anschlags 8 leicht niedergedrückt ist.

Im Umkehrbereich der Energieführungskette, wenn also eines der beiden Kettenglieder nach unten umschwenkt, trifft die untere Anlagefläche 11 des Kettengliedes 12 auf den unteren Dämpfungsbügel 14, der im Moment des Auftreffens ein Stück in den Freiraum 15 zurückweicht.

Bei erneuter Verschwenkung der Kettenglieder 1 und 12 in den horizontalen Bereich des unteren Trums gelangt die Anlagefläche 10 wieder in Berührung mit dem ihr zugewandten Dämpfungsbügel 13.

Wie am besten aus FIG.3 ersichtlich, ist jeder Dämpfungsbügel 13, 14 entlang einer dem Führungskanal 5 abgewandten Seite zwischen beiden Enden über eine Teillänge oder bevorzugt vollständig durchgehend mit der zum Führungskanal 5 weisenden Innenwand 16 bzw. dem umgebenden Körper des jeweiligen Seitenteils 2, 3 verbunden, nämlich materialeinheitlich über einen Verbindungsbereich 17.

Wie auch in FIG.2 zu sehen ist die Innenwand 16 des Seitenteils 2, 3 im Bereich des Dämpfungsbügels 13, 14 ausgespart bzw. vertieft. Oberhalb und unterhalb der Dämpfungsbügel 13, 14 sind jeweils zwei ausgesparte Vertiefungen 18A, 18B gegenüber der Oberfläche der Innenwand 16 vorgesehen. Diese Vertiefungen 18A, 18B sind als Aussparungen gegenüber dem Dämpfungsbügel 13, 14 im Spritzgussverfahren zusammen mit der Seitenlasche 2, 3 hergestellt und der dazwischen verbleibende Materialbereich bildet den Dämpfungsbügel 13, 14. Die Vertiefungen 18A, 18B sind um mindestens 50% der Abmessung umgebenden Wanddicke vertieft und haben in FIG.3 eine Tiefe, die fast 50% der Breite des Dämpfungsbügels 13, 14 in der Ebene der FIG.3 d.h. quer zur Längsrichtung beträgt.

Wie FIG.3 zeigt, hängt dabei eine hintere Vertiefung 18A offen mit dem Freiraum 15 zusammen bzw. bildet diesen und eine vorderseitige bzw. gegenüberliegende Vertiefung 18B ist an der anderen Seite des Dämpfungsbügels 13, 14 vorgesehen. Die hintere Vertiefung 18A wird dabei, in Seitenansicht betrachtet, vollständig im Anschlag 8 aufgenommen. Beide Vertiefungen 18A, 18B haben gleiche Tiefe und ähnliche Grundfläche in Seitenansicht (FIG.2), jeweils deutlich kleiner als die des vorstehenden Anschlags 8, wie gut aus FIG.2 ersichtlich. Bei ausreichender Tiefe der Vertiefungen 18A, 18B entsteht bei der dämpfenden Verformung der Dämpfungsbügel 13, 14 lediglich geringe Torsion über den Verbindungsbereich 17 und überwiegend die gewünschte Wirkung der Bogenbrücke, d.h. überwiegend Druckbelastung, welche über die Enden der Dämpfungsbügel 13, 14 jeweils in die tragenden Vollkörperbereiche des Anschlags 8 eingeleitet wird.

Durch die erfindungsgemäße Konstruktion ist es folglich mit sehr einfachen Mitteln möglich, eine optimale Geräuschdämpfung von Energieführungsketten zu erzielen. Darüber hinaus können aufgrund der vorteilhaften Spannungsverhältnisse in den Dämpfungsbügeln 13 und 14 Materialermüdungen in diesen Bereichen weitestgehend vermieden und dadurch die Lebensdauer einer Energieführungskette erheblich verlängert werden.

### Bezugszeichenliste

- 1: Kettenglied
- 2: Seitenteil
- 3: Seitenteil
- 4: Quersteg
- 5: Führungskanal
- 6: Halterung
- 7: Halterung
- 8: Anschlag
- 9: Aussparung
- 10: Anschlagfläche
- 11: Anschlagfläche
- 12: folgendes Kettenglied
- 13: Dämpfungsbügel
- 14: Dämpfungsbügel
- 15: Freiraum
- 16: Innenwand
- 17: Verbindungsbereich
- 18A, 18B: Vertiefung

## Patentansprüche

1. Energieführungskette mit einem Führungskanal (5) zur Führung von Leitungen, wie Schläuchen, Kabeln oder dergleichen, zwischen zwei Anschlussstellen, von denen wenigstens eine ortsveränderlich ist, mit mehreren gelenkig miteinander verbundenen Kettengliedern (1) aus Seitenteilen (2, 3) und Querstegen (4), wobei die Verschwenkbarkeit anschließender Kettenglieder (1) gegeneinander durch an den Seitenteilen (2,3) angeordnete, zusammenwirkende Anschläge (8) mit Anschlagflächen (10) begrenzt ist und wobei elastisch deformierbare Dämpfungselemente vorgesehen sind, die das Auflaufen der Bereiche zwischen den Anschlägen (8) und den Anschlagflächen (10) dämpfen, **dadurch gekennzeichnet,**
- **dass** zumindest einige Anschläge (8) in ihren Kontaktbereichen, in denen sie mit den Anschlagflächen (10) in Berührung kommen, mindestens einen in Richtung auf die jeweilige Anschlagfläche konvex gewölbten Dämpfungsbügel (13, 14) aufweisen,
- **dass** hinter dem Dämpfungsbügel (13, 14) ein Freiraum (15) vorgesehen ist;
- **dass** beide Enden des Dämpfungsbügels (13, 14) nach Art einer Bogenbrücke fest mit dem jeweiligen Anschlag (8) verbunden sind; und
- **dass** der Dämpfungsbügel (13, 14) mit der zum inneren Führungskanal (5) weisenden Innenwand des jeweiligen Seitenteils (2, 3) in seitlicher Richtung zumindest in einem Teilbereich zwischen den Enden des Dämpfungsbügels (13, 14) oder über seine gesamte Abmessung über einen Verbindungsbereich (17) verbunden (17) ist,
- wobei die Innenwand (16) des Seitenteils (2, 3) im Bereich des Dämpfungsbügels (13, 14) ausgespart ist, und eine in den Freiraum (15) mündende erste Vertiefung (18A) sowie eine gegenüberliegende zweite Vertiefung (18B) aufweist, welche gegenüber dem umgebenden Bereich der Oberfläche der Innenwand (16) vertieft sind.

2. Seitenteil (2, 3) für eine Energieführungskette mit einem Führungskanal (5) zur Führung von Leitungen, wie Schläuchen, Kabeln oder dergleichen, zwischen zwei Anschlussstellen, von denen wenigstens eine ortsveränderlich ist, mit mehreren gelenkig miteinander verbundenen Kettengliedern (1) aus zwei Seitenteilen (2, 3) und zwei Querstegen (4),
- wobei das Seitenteil (2, 3) Anschläge (8) aufweist, welche angeordnet sind zum Begrenzen der Verschwenkbarkeit gelenkig verbundener Kettenglieder (1) gegeneinander durch Zusammenwirken mit Anschlagflächen (10, 11) eines folgenden Seitenteils (2, 3) und
- wobei am Seitenteil (2, 3) elastisch deformierbare Dämpfungselemente vorgesehen sind, die das Auflaufen der Bereiche zwischen den Anschlägen (8) und den Anschlagflächen (10) dämpfen,
**dadurch gekennzeichnet,**
- **dass** zumindest ein Anschlag (8) in dessen Kontaktbereichen, in denen er zum Begrenzen der Verschwenkbarkeit mit den zusammenwirkenden Anschlagflächen (10, 11) in Berührung kommt, jeweils mindestens einen in Richtung auf die jeweilige zusammenwirkende Anschlagfläche (10, 11) konvex gewölbten Dämpfungsbügel (13, 14) aufweist,
- **dass** hinter dem Dämpfungsbügel (13, 14) ein Freiraum (15) vorgesehen ist;
- **dass** beide Enden des Dämpfungsbügels (13, 14) nach Art einer Bogenbrücke fest mit dem jeweiligen Anschlag (8) verbunden sind; und
- **dass** der Dämpfungsbügel (13, 14) mit einer Innenwand des Seitenteils (2, 3) in seitlicher Richtung zumindest in einem Teilbereich zwischen den Enden des Dämpfungsbügels (13, 14) oder über seine gesamte Abmessung über einen Verbindungsbereich (17) verbunden (17) ist,
- wobei die Innenwand (16) des Seitenteils (2, 3) im Bereich des Dämpfungsbügels (13, 14) ausgespart ist, und eine in den Freiraum (15) mündende erste Vertiefung (18A) sowie eine gegenüberliegende zweite Vertiefung (18B) aufweist, welche gegenüber dem umgebenden Bereich der Oberfläche der Innenwand (16) vertieft sind.

3. Vorrichtung nach Anspruch 1 oder 2, wobei die ausgesparten Vertiefungen (18A, 18B) gegenüber der Oberfläche der Innenwand um mindestens 50% der umgebenden Wanddicke vertieft sind und/oder die Tiefe der Vertiefung mindestens 33% der Breite des Dämpfungsbügels (13, 14) quer zur Längsrichtung beträgt.

4. Vorrichtung nach einem der Ansprüche 1 bis 4, **dadurch gekennzeichnet, dass** jedes Seitenteil (2, 3) aus Kunststoff besteht.

5. Vorrichtung nach Anspruch 5, **dadurch gekennzeichnet, dass** die Seitenteile (2, 3) einstückig ausgebildet sind und dass der jeweilige Dämpfungsbügel (13, 14) an seinen beiden Enden an den zugehörigen Anschlag (8) einstückig angeformt ist.

6. Vorrichtung nach einem der Ansprüche 1 bis 6, **dadurch gekennzeichnet, dass** auf beiden Seiten der Anschläge (8) je ein gewölbter Dämpfungsbügel (13, 14) vorgesehen ist.

7. Vorrichtung nach einem der Ansprüche 1 bis 7, **dadurch gekennzeichnet, dass** der Radius der Wölbung des Dämpfungsbügels (13, 14) vergleichsweise groß und die Wölbung dadurch relativ flach ist.

8. Vorrichtung nach einem der Ansprüche 1 bis 8, insbesondere nach Anspruch 8, **dadurch gekennzeichnet, dass** das Verhältnis der Sehnenlänge der Wölbung zu ihrer Höhe, mindestens10:1, insbesondere etwa 20:1 beträgt.

9. Vorrichtung nach einem der Ansprüche 1 bis 9, **dadurch gekennzeichnet, dass** sich der Dämpfungsbügel (13, 14) mindestens über die gesamte Breite des zugehörigen Anschlags (8) quer zur Längsrichtung erstreckt.

10. Vorrichtung nach einem der Ansprüche 1 bis 10, **dadurch gekennzeichnet, dass** sich der Dämpfungsbügel (13, 14) sowie der hinter diesem befindliche Freiraum (15) quer zur Längsrichtung des jeweiligen Seitenteils (2, 3) erstrecken.

## Claims

1. Energy chain with a guide channel (5) for guiding lines, such as hoses, cables or the like, between two connection points, at least one of which is non-stationary, comprising a plurality of chain links (1) which are composed of side parts (2, 3) and cross bars (4) and which are connected together in an articulated manner, wherein the pivotability of adjacent chain links (1) relative to one another is limited by cooperating abutments (8) and abutment surfaces (10) which are arranged on the side parts (2, 3), and wherein resiliently deformable damping elements are provided which damp abutting of the regions between the abutments (8) and the abutment surfaces (10), **characterized in that**
- at least some of the abutments (8) comprise in their contact regions in which they come into contact with the abutment surfaces (10) at least one damping bow (13, 14) which is curved convexly in the direction towards the respective abutment surface,
- a free space (15) is provided behind the damping bow (13, 14),
- both ends of the damping bow (13, 14) are fixedly connected to the respective abutment (8) in the manner of an arched bridge; and
- the damping bow (13, 14) is connected (17) in a lateral direction at least in a partial area between the ends of the damping bow or over its entire dimension via a connecting region (17) to an inner wall of the side part (2, 3) that faces towards the inner guide channel (5),
- wherein the inner wall (16) of the side part (2, 3) is recessed in the area of the damping bow (13, 14) and has a first recess (18A) opening into to the free space (15) as well as an opposite second recess (18B), the first and second recess (18A, 18B) being recessed in relation to the surrounding surface of the inner wall.

2. Side part for an energy chain comprising a guide channel (5) for guiding lines, such as hoses, cables or the like between two connection points, at least one of which is non-stationary, with a plurality of chain links (1) which are composed of two side parts (2, 3) and two cross bars (4) and which are connected together in an articulated manner,
- wherein the side part (2, 3) has abutments (8) which are arranged to limit the pivotability of chain links (1) connected in an articulated manner relative to one another by cooperating with abutment surfaces (10, 11) of a following side part (2, 3), and
- wherein on the side part (2, 3) resiliently deformable damping elements are provided, which damp abutting of the regions between the abutments (8) and the abutment surfaces (10), **characterized in that**
- at least one abutment (8) comprises in each of its contact regions, in which it comes into contact with the cooperating abutment surfaces (10, 11) to limit the pivotability, at least one damping bow (13, 14) which is convexly curved in the direction towards the respective cooperating abutment surface (10, 11),
- a free space (15) is provided behind the damping bow (13, 14),
- both ends of the damping bow (13, 14) are fixedly connected to the respective abutment (8) in the manner of an arched bridge, and
- the damping bow (13, 14) is connected (17) in a lateral direction at least in a partial area between the ends of the damping bow or over its entire dimension via a connecting region (17) to an inner wall of the side part (2, 3),
- wherein the inner wall (16) of the side part (2, 3) is recessed in the area of the damping bow (13, 14) and has a first recess (18A) opening into to the free space (15) as well as an opposite second recess (18B), the first and second recess (18A, 18B) being recessed in relation to the surrounding surface of the inner wall.

3. Device according to claim1 or 2, **characterized in that** the recesses (18A, 18B) have a depth of the recess, with respect to the surface of the inner wall, amounting to at least 50% of the surrounding wall thickness and/or the depth of the recess is at least 33% of the width of the damping bow (13, 14) perpendicular to the longitudinal direction.

4. Device according to one of claims 1 to 4, **characterized in that** each side part (2, 3) consist of plastics material.

5. Device according to claim 5, **characterized in that** the side parts (2, 3) are formed in one piece, and **in that** the respective damping bow (13, 14) is integrally formed at both its ends with the associated abutment (8).

6. Device according to any one of claims 1 to 6, **characterized in that** a curved damping bow (13, 14) is provided on both sides of the abutments (8).

7. Device according to any one of claims 1 to 7, **characterized in that** the radius of the curve of the damping bow (13, 14) is comparatively large and the curve is thus relatively flat.

8. Device according to any one of claims 1 to 8, in particular according to claim 8, **characterized in that** the ratio of the chord length of the curve to its height is at least 10:1, in particular approximately 20:1.

9. Device according to any one of claims 1 to 9, **characterized in that** the damping bow (13, 14) extends at least over the entire width of the associated abutment (8) when seen transversely to the longitudinal direction.

10. Device according to any one of claims 1 to 10, **characterized in that** the damping bow (13, 14) and the free space (15) located behind the damping bow (13, 14) extend transversely to the longitudinal direction of the respective side part (2, 3).

## Revendications

1. Chaîne d'approvisionnement d'énergie avec un canal de guidage (5) pour le guidage de conduites, telles que des tuyaux, des câbles ou similaires entre deux points de raccordement, dont au moins un est mobile, avec plusieurs maillons de chaîne (1) reliés entre eux de manière articulée et constitués de parties latérales (2, 3) et de traverses (4), la capacité de pivotement de maillons de chaîne (1) adjacents les uns par rapport aux autres étant limitée par des butées (8) coopérantes disposées sur les parties latérales (2, 3) avec des surfaces de butée (10), et des éléments d'amortissement élastiquement déformables étant prévus, qui amortissent l'échouement des zones entre les butées (8) et les surfaces de butée (10),
**caractérisée en ce que**
- au moins quelques butées (8) présentent dans leurs zones de contact, dans lesquelles elles entrent en contact avec les surfaces de butée (10), au moins un étrier d'amortissement (13, 14) bombé de manière convexe en direction de la surface de butée respective,
- un espace libre (15) est prévu derrière l'étrier d'amortissement (13, 14);
- les deux extrémités de l'étrier d'amortissement (13, 14) sont reliées solidement à la butée respective (8) à la manière d'un pont arqué; et
- l'étrier d'amortissement (13, 14) est relié (17) à la paroi intérieure, tournée vers le canal de guidage intérieur (5), de la partie latérale respective (2, 3) dans la direction latérale au moins dans une zone partielle entre les extrémités de l'étrier d'amortissement (13, 14) ou sur toute sa dimension par une zone de liaison (17),
- la paroi intérieure (16) de la partie latérale 2, 3 étant évidée dans la zone de l'étrier d'amortissement (13, 14) et présentant un premier évidement (18A) débouchant dans l'espace libre (15) ainsi qu'un deuxième évidement (18B) opposé, qui sont en retrait par rapport à la zone environnante de la surface de la paroi intérieure (16).

2. Partie latérale (2, 3) pour une chaîne d'approvisionnement d'énergie avec un canal de guidage (5) pour le guidage de conduites telles que des tuyaux, des câbles ou similaires entre deux points de raccordement, dont au moins un est mobile, avec plusieurs maillons de chaîne (1) reliés entre eux de manière articulée et constitués de deux parties latérales (2, 3) et de deux traverses (4),
- la partie latérale (2, 3) présentant des butées (8) qui sont disposées pour limiter la capacité de pivotement de maillons de chaîne (1) reliés entre eux de manière articulée les uns par rapport aux autres par coopération avec des surfaces de butée (10, 11) d'une partie latérale (2, 3) suivante et
- des éléments d'amortissement élastiquement déformables étant prévus sur la partie latérale (2, 3), lesquels amortissent l'échouement des zones entre les butées (8) et les surfaces de butée (10),
**caractérisée en ce que**
- au moins une butée (8) présente dans ses zones de contact, dans lesquelles elle vient en contact avec les surfaces de butée (10, 11) coopérantes pour limiter la capacité de pivotement, respectivement au moins un étrier d'amortissement (13, 14) bombé de manière convexe en direction de la surface de butée (10, 11) coopérante respective,
- un espace libre (15) est prévu derrière l'étrier d'amortissement (13, 14);
- les deux extrémités de l'étrier d'amortissement (13, 14) sont reliées solidement à la butée respective (8) à la manière d'un pont arqué; et
- l'étrier d'amortissement (13, 14) est relié (17) à une paroi intérieure de la partie latérale (2, 3) dans la direction latérale au moins dans une zone partielle entre les extrémités de l'étrier d'amortissement (13, 14) ou sur toute sa dimension par une zone de liaison (17),
- la paroi intérieure (16) de la partie latérale (2, 3) étant évidée dans la zone de l'étrier d'amortissement (13, 14) et présentant un premier évidement (18A) débouchant dans l'espace libre (15) ainsi qu'un deuxième évidement (18B) opposé, qui sont en retrait par rapport à la zone environnante de la surface de la paroi intérieure (16) .

3. Dispositif selon la revendication 1 ou 2, dans lequel les évidements (18A, 18B) sont en retrait par rapport à la surface de la paroi interne d'au moins 50% de l'épaisseur de la paroi environnante et/ou la profondeur de la cavité représente au moins 33% de la largeur de l'étrier d'amortissement (13, 14) transversalement à la direction longitudinale.

4. Dispositif selon l'une des revendications 1 à 4, **caractérisé en ce que** chaque partie latérale (2, 3) est réalisée en matière plastique.

5. Dispositif selon la revendication 5, **caractérisé en ce que** les parties latérales (2, 3) sont formées d'une seule pièce et **en ce que** l'étrier d'amortissement (13, 14) respectif est formé d'une seule pièce à ses deux extrémités sur la butée (8) correspondante.

6. Dispositif selon l'une des revendications 1 à 6, **caractérisé en ce qu'**un étrier d'amortissement (13, 14) bombé est prévu de chaque côté des butées (8).

7. Dispositif selon l'une des revendications 1 à 7, **caractérisé en ce que** le rayon de courbure de l'étrier d'amortissement (13, 14) est relativement important et que la courbure est ainsi relativement plate.

8. Dispositif selon l'une des revendications 1 à 8, en particulier selon la revendication 8, **caractérisé en ce que** le rapport entre la longueur de la corde de la voûte et sa hauteur est d'au moins 10:1, en particulier d'environ 20:1.

9. Dispositif selon l'une des revendications 1 à 9, **caractérisé en ce que** l'étrier d'amortissement (13, 14) s'étend au moins sur toute la largeur de la butée (8) associée, transversalement à la direction longitudinale.

10. Dispositif selon l'une des revendications 1 à 10, **caractérisé en ce que** l'étrier d'amortissement (13, 14) ainsi que l'espace libre (15) se trouvant derrière celui-ci s'étendent transversalement à la direction longitudinale de la partie latérale (2, 3) correspondante.
